# EUROPEAN PATENT APPLICATION

(11) **EP 4 242 041 A1**
(43) Date of publication of application: **13.09.2023**
(21) Application number: 21903817.1
(22) Date of filing: 07.12.2021
(51) Int. Cl.: B60L 53/126, B60L 53/66, B60L 55/00, H02J 50/12, H02J 50/80, H02J 50/90, H04W 4/40, H04W 84/12, H01Q 1/32

(54) **WIRELESS POWER TRANSFER PAIRING METHOD AND APPARATUS**

(30) Priority: 07.12.2020 US 202063122239 P; 14.12.2020 US 202063125050 P
(71) Applicant: HYUNDAI MOTOR COMPANY, Seoul 06797 (KR); Kia Corporation, Seocho-gu Seoul 06797 (KR); Myongji University Industry and Academia Cooperation Foundation, Gyeonggi-do 17058 (KR)
(72) Inventor: SEONG, Jae Yong, Hwaseong-si, Gyeonggi-do 18280 (KR); SHIN, Min Ho, Yongin-si, Gyeonggi-do 17058 (KR)
(74) Representative: Isarpatent
(86) International application number: PCT/KR2021/018484
(87) International publication number: WO 2022/124771

(57) **Abstract**

Disclosed is a wireless power transfer pairing method and apparatus for concurrently performing a pairing procedure in a V2G WPT fine positioning procedure. The wireless power transfer pairing method comprises a step of, when an LF signal indicating that a secondary device of an electric vehicle is positioned within an alignment tolerance area on a primary device of an electric vehicle power supply device is detected, parking the electric vehicle, transmitting, to a supply equipment communication controller (SECC), a fine positioning request message in which a result code parameter is configured as a success, and transmitting, immediately after receiving from the SECC, a fine positioning response message in which a response code parameter is configured as OK, a pairing request message in which an identifier code parameter is configured as a pairing identification code and an EV processing parameter is configured as termination, to the SECC.

## Description

### [Technical Field]

The present disclosure relates to a method and an apparatus for wireless power transfer pairing, in which a paring procedure is performed simultaneously together with a fine positioning procedure between an electric vehicle communication controller and a supply equipment communication controller for magnetic field-based wireless power transfer between an electric vehicle (EV) and a power grid.

### [Background Art]

In a magnetic field (MF)-based wireless power transfer (WPT) system, communication between an electric vehicle communication controller (EVCC) and a supply equipment communication controller (SECC) is typically established using a singleton SECC discovery protocol (SDP). Signals or messages are transmitted and received using low-frequency (LF) signals or low power excitation (LPE) without the need of a pairing and positioning device (PPD). Alternatively, signals or messages are transmitted and received using machine vision technologies such as Quick Response (QR) codes, or using peer-to-peer (P2PS) with optical schemes.

In a vehicle-to-grid (V2G) communication session for wireless power transfer, messages between the EVCC and the SECC follow procedures such as fine positioning setup, fine positioning, and pairing in the order described. Here, the fine positioning or positioning is to continuously provide alignment information while an EV is approaching a supply device to support the EV to approach within an alignment tolerance range. The pairing is used to ensure that both the EVCC and the SECC can uniquely identify a primary device located in the EV.

Meanwhile, a fine positioning request message among SDP messages or fine positioning messages includes compatibility information and an electric vehicle identifier (EVID). That is, the fine positioning request message usually includes information of a plurality of compatible SECCs. However, a fine positioning response message includes information on only one candidate SECC. Therefore, regardless of the location of the EV, there is always a possibility that the EV has a connection with a wrong SECC. Accordingly, the EV may mistakenly recognize a wireless local area network (WLAN) signal at a charging station, and enter another nearby charging station rather than a target charging station.

In addition, when connected to a wrong SECC, the EV has no opportunity to detect this wrong connection except when the fine positioning fails. In such an error situation, the EV cannot properly proceed or complete the fine positioning procedure. In such a case, the EV has to terminate the current fine positioning session, return to the fine positioning setup procedure or SDP procedure, and start over from the SECC discovery, which is very inefficient.

As described above, it is currently a situation where errors are likely to occur in the SDP procedure or fine positioning procedure for wireless power transfer between an electric vehicle and a power grid, and a solution to this problem is required.

### [Disclosure]

### [Technical Problem]

An objective of the present disclosure is to provide a method and an apparatus for wireless power transfer (WPT) pairing, in which a paring procedure is performed actually simultaneously with a fine positioning procedure, as being combined with the fine positioning procedure between an electric vehicle communication controller (EVCC) and a supply equipment communication controller (SECC) for magnetic field-based WPT between an electric vehicle (EV) and a power grid.

Another objective of the present disclosure is to provide a method and an apparatus for WPT pairing, which are capable of effectively preventing incorrect connection between an SECC and an EVCC in a fine positioning procedure and capable of effectively coping with an occurrence of incorrect connection by performing the pairing procedure and the fine positioning procedure for WPT between a power grid and an EV in a combined manner.

### [Technical Solution]

A WPT pairing method according to an aspect of the present disclosure for resolving the above-described technical problem, as a method for pairing with a supply equipment communication controller (SECC), performed by an electric vehicle (EV), may comprise: transmitting, to the SECC, a fine positioning request message (FinePositioningReq) including information on an identifier of a first antenna and a first operating frequency of a first electric vehicle supply equipment (EVSE) among EVSEs connected to the SECC; transmitting, to a primary device of the first EVSE, a low-frequency (LF) signal at the first operating frequency; receiving, from the SECC, information on the LF signal at the EVSEs through a fine positioning response message (FinePositioningRes); dynamically calculating a position of a primary device of a second EVSE having a largest LF signal value based on the information on the LF signal at the EVSEs; parking when detecting an LF signal indicating that a secondary device of the EV is located within an alignment tolerance range from the primary device of the second EVSE; determining whether the second EVSE is identical to the first EVSE indicated by the fine positioning request message or a fine positioning setup response message; and immediately after transmitting a fine positioning request message having a result code (ResultCode) parameter set to 'success' to the SECC and receiving a fine positioning response message having a response code (ResponseCode) parameter set to `OK' from the SECC, transmitting, to the SECC, a pairing request message having an identifier code (ObservedIDcode) parameter set to a pairing identification code and an EV processing (EVProcessing) parameter set to 'finished'.

The method may further comprise: receiving, from the SECC, a pairing response message (PairingRes) having an EV processing parameter set to 'finished' and a response code parameter set to 'OK'.

The method may further comprise: when the second EVSE having the largest LF signal value is different from the first EVSE indicated by the fine positioning request message or fine positioning setup request message (FinePositioningSetupRes), and the second EVSE has a same configuration as the first EVSE, allowing the SECC to change an identifier of a second antenna of the second EVSE to the identifier of the first antenna of the first EVSE and to control an internal connection between the second antenna of the second EVSE and the first antenna of the first EVSE to be changed.

The method may further comprise: when the second EVSE having the largest LF signal value is different from the first EVSE indicated by the fine positioning request message or fine positioning setup response message (FinePositioningSetupRes), and the second EVSE is an EVSE having a configuration different from that of the first EVSE, receiving, from the SECC, a fine positioning response message including information requesting to return to a fine positioning setup procedure; or receiving, from the SECC, a fine positioning response message having a response code parameter set to `OK' and including an alternative SECC information (AlternativeSECCInfo) parameter or an alternative SECC list (AlternativeSECCList) parameter.

The method may further comprise: transmitting, to the SECC, an LF signal having a `connection admission control (CAC)' set to a same antenna identifier (ANT_ID) or antenna identifier code (IDCode) through point-to-point signal (P2PS) signaling between an electric vehicle communication controller (EVCC) of the EV and the SECC.

The second EVSE may receive the LF signal with a strength exceeding the specific threshold through all antennas for LF signal reception and has the largest LF signal value among the EVSEs.

A WPT pairing method according to another aspect of the present disclosure for resolving the above-described technical problem, as a method for pairing with an electric vehicle communication controller (EVCC) of an electric vehicle (EV), performed by a supply equipment communication controller (SECC), may comprise: in response to a fine positioning setup request message (FinePositioningSetupReq), transmitting, to the EVCC, a fine positioning setup response message (FinePositioningSetupRes) including information on identifiers of antennas, positions and directions of antennas, and operating frequencies of respective electric vehicle supply equipments (EVSEs) connected to the SECC; receiving, from the EVCC, information on an identifier of a first antenna and information on an effective isotropically radiated power (EIRP) of an antenna of a secondary device of the EV through a fine positioning request message (FinePositioningReq); activating LF receivers of the respective EVSEs to receive a low-frequency (LF) signal for fine positioning from the EV; receiving an LF signal having the identifier of the first antenna through point-to-point signal (P2PS) signaling; determining whether the identifier of the first antenna is identical to a pre-stored antenna identifier or identifier code (ObservedIDCode); transmitting, to the EVCC, information on received signal strength indicators (RSSIs) of the LF signal at the EVSEs, when the identifier of the first antenna is identical to the identifier code; receiving, from the EVCC, a fine positioning request message (FinePositioningReq) having a result code (ResultCode) parameter set to 'success'; transmitting, to the EVCC, a fine positioning response message (FinePositioningRes) having a response code (ResponseCode) parameter set to `OK' in response to the fine positioning request message; and receiving, from the EVCC, a pairing request message (PairingReq) having an identifier code parameter set to a paring identification code and an EV processing (EVProcessing) parameter set to 'finished', when the second EVSE having a largest LF signal value among the EVSEs is identical to the first EVSE corresponding to the identifier of the first antenna indicated by the fine positioning setup response message or the fine positioning request message.

The method may further comprise: when the second EVSE is identical to the first EVSE, transmitting, to the EVCC, a pairing response message (PairingRes) having an EV processing parameter set to 'finished' and a response code parameter set to 'OK'.

The method may further comprise: when the second EVSE is an EVSE different from the first EVSE and the second EVSE is an EVSE having a same configuration as the first EVSE, changing an identifier of a second antenna of the second EVSE to the identifier of the first antenna of the first EVSE; and controlling an internal connection between the second antenna of the second EVSE and the first antenna of the first EVSE to be changed.

The method may further comprise: when the second EVSE is an EVSE different from the first EVSE and the second EVSE is an EVSE having a configuration different from that of the first EVSE, transmitting, to the EVCC, a fine positioning response message including information requesting to return to a fine positioning setup procedure; or transmitting, to the EVCC, a fine positioning response message having a response code (ResponseCode) parameter set to `OK' and including an alternative SECC information (AlternativeSECCInfo) parameter or an alternative SECC list (AlternativeSECCList) parameter.

A WPT pairing method according to yet another aspect of the present disclosure for resolving the above-described technical problem, as a method for pairing with an electric vehicle communication controller (EVCC) of an electric vehicle (EV), performed by a supply equipment communication controller (SECC), may comprise: in response to a fine positioning setup request message (FinePositioningSetupReq), transmitting, to the EVCC, a fine positioning setup response message (FinePositioningSetupRes) including information on identifiers of antennas and operating frequencies of respective electric vehicle supply equipments (EVSEs) connected to the SECC; controlling a first EVSE arbitrarily selected from the EVSEs to transmit a low-frequency (LF) signal for positioning; receiving, from the EVCC, a fine positioning request message (FinePositioningReq) having a result code (ResultCode) parameter set to 'success'; and immediately after transmitting a fine positioning response message (FinePositioningRes) having a result code (ResultCode) parameter set to `OK' to the EVCC in response to the fine positioning request message, receiving, from the EVCC, a pairing request message having an identifier code (ObservedIDcode) parameter set to a pairing identification code and an EV processing (EVProcessing) parameter set to 'finished' .

The method may further comprise: transmitting, to the EVCC, a pairing response message (PairingRes) having an EV processing parameter set to 'finished' and a response code parameter set to `OK' in response to the pairing request message.

The method may further comprise: when a reception result of the LF signal received at a secondary device of the EV, which is received from the EV, is less than a reference value, controlling a second EVSE having a same antenna configuration as the first EVSE among the EVSEs indicated by the fine positioning setup response message to transmit an LF signal with a same antenna identifier; and when an EVSE having a largest LF signal value for the LF signal among the EVSEs is the second EVSE, changing an identifier of a second antenna of the second EVSE to an identifier of a first antenna of the first EVSE, and controlling an internal connection between the second antenna of the second EVSE and the first antenna of the first EVSE to be changed.

The method may further comprise: when an EVSE having a largest LF signal value for the LF signal is not the second EVSE and has a different configuration from that of the second EVSE, or the LF signal value is less than a specific threshold, transmitting, to the EVCC, a positioning setup response message including information requesting to return to a fine positioning setup procedure; or transmitting, to the EVCC, a fine positioning response message having a response code (ResponseCode) parameter set to `OK' and including an alternative SECC information (AlternativeSECCInfo) parameter or an alternative SECC list (AlternativeSECCList) parameter.

The method may further comprise: determining whether a `connection admission control (CAC)' in the LF signal transmitted through point-to-point signal (P2PS) signaling with the EVCC is maintained as a same antenna identifier (ANT_ID) or antenna identifier code (IDCode).

A WPT pairing method according to yet another aspect of the present disclosure for resolving the above-described technical problem, as a method for pairing with a supply equipment communication controller (SECC), performed by an electric vehicle communication controller (EVCC), may comprise: transmitting, to the SECC, a fine positioning request message (FinePositioningReq) including information on an identifier (ANT_ID) of a first antenna and an effective isotropically radiated power (EIRP) of a secondary device of an electric vehicle (EV); receiving a low-frequency (LF) signal from a primary device of a first electric vehicle supply equipment (EVSE) arbitrarily selected from EVSEs connected to the SECC; transmitting, to the SECC, an LF signal having a `connection admission control (CAC)' set to the identifier of the first antenna identifier or an identifier code (IDCode) of the first antenna through point-to-point signal (P2PS) signaling; transmitting, to the SECC, information on a received signal strength indicator (RSSI) detected at a secondary device of the EV; dynamically calculating a position of the primary device based on the RSSI; in response to acquiring a signal or RSSI indicating that the secondary device is located within an alignment tolerance range from the primary device, stopping and parking the EV; and immediately after transmitting a fine positioning request message having a result code (ResultCode) parameter set to `positioning success' to the SECC and receiving a fine positioning response message having a response code (ResponseCode) parameter set to `OK' from the SECC, transmitting, to the SECC, a pairing request message (PairingReq) having an identifier code (ObservedIDcode) parameter set to a pairing identification code and an EV processing (EVProcessing) parameter set to 'finished'.

The method may further comprise: receiving, from the SECC, a pairing response message (PairingRes) having an EV processing parameter set to 'finished' and a response code parameter set to 'OK'.

The method may further comprise: when a signal or RSSI value indicating that the secondary device is located within an alignment tolerance range from the primary device is not recognized in the parking of the EV, transmitting, to the SECC, a fine positioning request message having a result code parameter set to `positioning failure'; and receiving, from the SECC, a fine positioning response message having a response code parameter set to `OK' and including an alternative SECC information (AlternativeSECCInfo) parameter or an alternative SECC list (AlternativeSECCList) parameter.

A WPT pairing apparatus according to yet another aspect of the present disclosure for resolving the above-described technical problem, as a WPT pairing apparatus included in a supply equipment communication controller (SECC), which is configured to perform paring with an electric vehicle communication controller (EVCC) in wireless power transfer between an electric vehicle (EV) and a power grid, may comprise: a processor; and a memory storing instructions executable by the processor. When executed by the processor, the instructions may cause the processor to perform: transmitting and receiving, to and from the EVCC, fine positioning-related messages to align a secondary device of the EV within an alignment tolerance range from a primary device of an electric vehicle supply equipment (EVSE) connected to the SECC; receiving, from the EVCC, a low-frequency (LF) signal having a `connection admission control (CAC)' set to an identifier (ANT_ID) of a first antenna or an antenna identifier code (IDCode) through point-to-point signal (P2PS) signaling; and after receiving a pairing request message (PairingReq) having a result code (ResultCode) parameter set to 'success' from the EVCC and transmitting a fine positioning response message (FinePositioningRes) having a response code (ResponseCode) parameter set to `OK' to the EVCC, transmitting, from the EVCC, a paring request message (PairingReq) having an identifier code (ObservedIDcode) parameter set to a pairing identification code and an EV processing (EVProcessing) parameter set to 'finished'.

The instructions may cause the processor to further perform: transmitting, to the EVCC, a pairing response message (PairingRes) having an EV processing parameter set to 'finished' and a response code parameter set to 'OK'.

The instructions may cause the processor to further perform: controlling a first EVSE arbitrarily selected from among EVSEs connected to the SECC to transmit a low frequency (LF) signal for fine positioning; when a reception result for the LF signal received at the secondary device of the EV, which is received from the EV, is less than a reference value, controlling a second EVSE having a same antenna configuration as the first EVSE among EVSEs indicated by the fine positioning request message or a fine positioning setup response message to transmit an LF signal with a same antenna identifier; receiving a fine position request message (FinePositioningReq) having a result code (ResultCode) parameter set to 'success' from the EVCC of the EV that has stopped and parked after performing fine positioning based on the LF signal; and when an EVSE having a largest LF signal value for the LF signal is the second EVSE, changing an identifier of a second antenna of the second EVSE to an identifier of a first antenna of the first EVSE, and controlling an internal connection between the second antenna of the second EVSE and the first antenna of the first EVSE to be changed.

The instructions may cause the processor to further perform: receiving, from the EVCC, a fine positioning request message having a result code parameter set to `positioning failure'; and in response to the fine positioning request message, transmitting, to the SECC, a fine positioning response message having a response code (ResponseCode) parameter set to OK and including an alternative SECC information (AlternativeSECCInfo) parameter or an alternative SECC list (AlternativeSECCList) parameter.

### [Advantageous Effects]

According to the present disclosure, a pairing procedure can be combined with a fine positioning procedure in a wireless power transfer (WPT) process between an EV and a power grid, thereby omitting or simplifying the pairing procedure.

In addition, according to the present disclosure, a problem in which an SDP server incorrectly receives information on an EVCC, or a problem in which an EV incorrectly recognizes a WLAN signal from the SDP server and enters a nearby charging station can be effectively prevented while performing a fine positioning procedure.

In addition, according to the present disclosure, errors that easily occur in the fine positioning procedure can be effectively and quickly coped with through a procedure in which the SDP server or an SECC connected to the SDP server changes antenna identifier information of a charging station to which the EV has already entered and retransmits it to the EV, thereby increasing user convenience by omitting repetitive tasks of the EV or user according to the errors.

In addition, when an error that cannot be resolved in a current session occurs during the fine positioning procedure, the SECC can provide information on an alternative SECC or information of a list of alternative SECCs that can be used by the EVCC, such that the EVCC returning to an SECC discovery procedure can easily perform the fine positioning setup procedure again. Accordingly, there is an advantage of increasing the efficiency of the WPT system and reducing costs while simplifying a V2G communication session procedure.

### [Description of Drawings]

FIG. 1 is a diagram for schematically describing an overall configuration of a magnetic field (MF)-based WPT system capable of employing a WPT pairing method according to an exemplary embodiment of the present disclosure.
FIG. 2 is a diagram for describing a wireless power flow and communication interfaces between a supply device (SD) and an EV device (EVD) employable in the WPT system of FIG. 1.
FIG. 3 is a flowchart for describing a system model capable of employing a WPT pairing method according to an exemplary embodiment of the present disclosure.
FIG. 4 is an exemplary diagram of a WPT system architecture capable of employing the WPT pairing method of FIG. 3.
FIGS. 5 to 7 are exemplary diagrams for describing a problem in association between the SECC and the EV in the system model of FIG. 3.
FIG. 8 is a sequence chart illustrating a WPT pairing method applicable to the system model of FIG. 3.
FIG. 9 is an exemplary diagram for describing an LF fine positioning procedure employable in the WPT pairing method of FIG. 8.
FIG. 10 is a flowchart illustrating a V2G communication procedure employable in the WPT pairing method of FIG. 8.
FIG. 11 is a schematic block diagram for describing main components of a WPT pairing apparatus according to another exemplary embodiment of the present disclosure.

### [Best mode of the Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as `comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Additional terms used in the present disclosure are defined as follows.

"Electric vehicle (EV)" may refer to an automobile defined in 49 code of federal regulations (CFR) 523.3 or the like. The EV may be used on highways and driven by electricity supplied from a vehicle-mounted energy storage device such as a battery rechargeable from a power source outside the vehicle. The power supply source may include a residence, a public electric service, or a generator using vehicle-mounted fuel. The EV may be referred to as an electric car, an electric automobile, an electric road vehicle (ERV), a plug-in vehicle (PV), a plug-in vehicle (xEV), or the like, the xEV may be referred to as or classified into a plug-in all-electric vehicle or battery electric vehicle (BEV), a plug-in electric vehicle (PEV), a hybrid electric vehicle (HEV), a hybrid plug-in electric vehicle (HPEV), a plug-in hybrid electric vehicle (PHEV), or the like.

"Plug-in Electric Vehicle (PEV)" may refer to an EV that recharges the on-vehicle primary battery by connecting to the power grid.

"Wireless power charging system (WCS)" may refer to a system for wireless power transfer, alignment, and communication between a ground assembly (GA) and a vehicle assembly (VA).

"Wireless power transfer (WPT)" may refer to a technology that transfers or receives electric power to and from an EV through non-contact means such as electromagnetic induction and resonance from a power source such as utility, grid, energy storage device, and fuel cell generator.

"Utility": A set of systems which supply electrical energy and may include a customer information system (CIS), an advanced metering infrastructure (AMI), rates and revenue system, etc. The utility may provide the EV with energy based on a rates table and discrete events. Additionally, the utility may provide information about certification of EVs, interval of power consumption measurements, and a tariff.

"Smart charging": A system in which EVSE and/or PEV communicate with power grid to optimize charging ratio or discharging ratio of EV by reflecting capacity of the power grid or expense of use.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupling": Magnetic coupling between two coils. In the present disclosure, coupling between the GA Coil and the VA Coil.

"Original equipment manufacturer (OEM)": An EV manufacturer or a server operated by the EV manufacturer. It may include a root certification authority (CA) or a root certification server that issues an OEM root certificate.

"Power grid operator (V2G operator)": A primary actor participating in V2G communication using a transmission protocol, or an entity for initiation of a blockchain for automatic authentication of an EV or EV user and creation of a smart contract on the blockchain. It may include at least one trusted certification authority or trusted certification server.

"Charging service operator (or, mobility operator (MO))": One of entities within a PnC architecture that have a contractual relationship with an EV owner regarding charging, approval, and payment to enable an EV driver to charge an EV battery at a charging station. It may include at least one certification authority or certification server that issues and manages its own certificate. The charging service operator may be referred to as a mobility operator.

"Charge service provider (CSP)": An entity responsible for managing and authenticating a credential of an EV user, and performing a role of providing billing and other value-added services to customers. It may correspond to a special type of MO, and may be implemented in a combined form with MO.

"charging station (CS)": A facility or device that has one or more EV supply equipment and actually performs charging of an EV.

"Charging station operator (CSO)": An entity that is connected to a power grid and manages power in order to supply power requested by an EV. It may be a term of the same concept as a charge point operator (CPO) or an e-mobility service provider (eMSP), or it may be a term of a concept included in the CPO or eMSP or including the CPO or eMSP. The CSO, CPO or eMSP may include at least one certification authority that issues or manages its own certificate.

"e-mobility authentication identifier (eMAID)": A unique identifier that links a contract certificate to a payment account of an owner of an electromobility that uses electricity. In exemplary embodiments, the mobility authentication identifier may include an identifier of an EV certificate or an identifier of a provisioning certificate. The term eMAID may be replaced to refer to `e-mobility account identifier' or may be replaced with a contract ID.

"Clearing house (CH)": An entity that handles cooperation matters between MOs, CSPs, and CSOs. It can act as an intermediary that facilitates approval, billing, and adjustment procedures for EV charging service roaming between two parties.

"Roaming": Information exchanges and a scheme and provisions between CSPs, which allows EV users to access the charging services provided by multiple CSPs or CSOs pertaining to multiple e-mobility networks by using a single credential and contract.

"Credential": A physical or digital asset representing an identity of an EV or EV owner, and may include a password used to verify the identity, a public key and private key pair used in a public key encryption algorithm, a public key certificate issued by a certification authority, information related to a trusted root certification authority.

"Certificate": An electronic document binding a public key to an ID by a digital signature.

"Service session": A collection of services around a charge point related to the charging of an EV assigned to a specific customer in a specific timeframe with a unique identifier.

Hereinafter, exemplary embodiments of the present disclosure will be explained in detail by referring to accompanying figures.

A method for pairing between an EVCC and an SECC for vehicle-to-grid (V2G) wireless power transfer (WPT) described in the present exemplary embodiments may be provided as a new WPT paring method which is capable of simplifying a pairing procedure by combining the pairing procedure with a fine positioning procedure using low-frequency (LF)-based point-to-point signal (P2PS) signaling performed in a V2G communication session, and is capable of efficiently preventing or resolving errors occurring frequently in the fine positioning procedure.

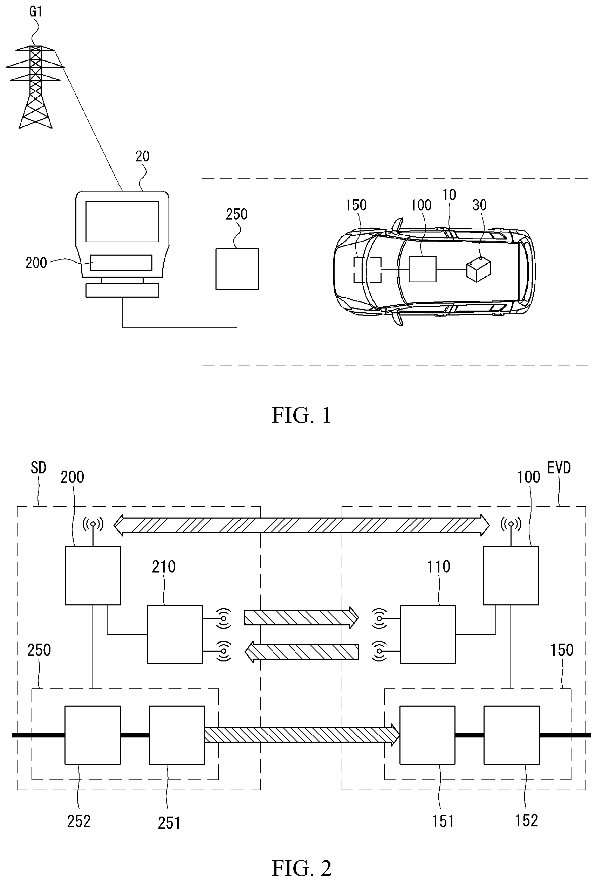

FIG. 1 is a diagram for schematically describing an overall configuration of a magnetic field (MF)-based WPT system capable of employing a WPT pairing method according to an exemplary embodiment of the present disclosure.

As shown in FIG. 1, WPT for an electric vehicle (hereinafter, `EV') 10 may be defined as a process of transferring an electric energy of a power grid G1 from a supply device to an EV device through a magnetic field in a state of magnetic induction or magnetic resonance without direct current flow through a galvanic connection. That is, the WPT may be used to charge a battery 30 of the EV 10 by transferring power from a charging station 20 to the EV 10.

The EV 10 may include an EV power circuit 150 having a secondary device electromagnetically coupled with a primary device within a supply power circuit 250 of the charging station 20. A secondary coil within the secondary device may receive electromagnetic energy from a primary coil of the primary device connected to the charging station 20 according to electromagnetic induction or magnetic resonance under control of an EVCC 100 of the EV 10. The electromagnetic energy transferred to the EV 10 may be converted into an induced current, and the induced current may be rectified into a DC current and then used to charge the battery 30.

The charging station 20 may receive power from the commercial power grid G1 or a power backbone and supply electromagnetic energy to the EV 10 through the supply power circuit 250 under control of an SECC 200 within the charging station 20. The supply power circuit 250 may be a component corresponding to at least part of an EVSE may be located in various places such as a garage or parking lot belonging to the home of the owner of the EV 10, a parking area for EV charging at a gas station, or a parking area at a shopping center or office building.

In addition, the charging station 20 may communicate with a power infrastructure management system, infrastructure server, or computing device on a network, which manages the power grid G1 through wired/wireless communication, and may perform wireless communication with the EV 10.

The wireless communication may include wireless LAN (WLAN)-based communication based on Wi-Fi according to the IEEE 802.11 protocol. In addition, the wireless communication may include point-to-point signal (P2PS) communication using LF signals and/or low power excitation (LPE) signals. In addition, the wireless communication scheme between the charging station 20 and the EV 10 may include one or more of various communication schemes such as Bluetooth, Zigbee, and cellular as well as the above-described communication schemes.

In addition, the EV 10 and the charging station 20 may perform WPT or a charging process by exchanging messages according to an extensible markup language (XML) or an efficient XML interchange (EXI) based data expression format. That is, communication for the charging process may be performed between an EVCC 100 and an SECC 200 through a wireless LAN or the like. However, in order to prevent a connection failure due to LF signal characteristics in the LF signal-based fine positioning and pairing procedure, a pairing procedure combined with fine positioning may be performed in the present exemplary embodiments.

In addition, during a communication process for the charging process, the EV 10 may first verify an identity of the charging station 20 to identify whether it is a trusted facility or apparatus, and establish a secure channel with the SECC 20 of the charging station 20 to protect communication from unauthorized access. The secure channel may be established by a transport layer security (TLS). A TLS session may be performed according to a TLS session establishment procedure after an Internet protocol (IP)-based communication connection establishment procedure.

FIG. 2 is a diagram for describing a wireless power flow and communication interfaces between a supply device (SD) and an EV device (EVD) employable in the WPT system of FIG. 1.

As shown in FIG. 2, in the wireless power flow between the SD and the EVD, supply power electronics 252 of the supply power circuit 250 may convert commercial power and transfer it to a primary device 251, the primary device 251 may transfer electromagnetic energy to a secondary device 151 of an EV power circuit 150 under control of the SECC 200, and power electronics 152 of the EV may convert an induced current generated in the secondary device 151 under control of the EVCC 110 and supply it to a battery or the like.

Communication between the EVCC 100 and the SECC 200 may be performed using a wireless local area network (WLAN) link supporting a physical layer and a data link layer of a wireless communication interface. In addition, in the communication between the EVCC 100 and the SECC 200, before initiating a WPT session, the SECC 200 and the EVCC 100 may perform analysis and confirmation for compatibility.

In the above-described WPT system, requirements for message exchange and communication security may be defined for compatibility analysis and confirmation in order to satisfy requirements of a compatibility class. The requirements for message exchange may include a communication timing requirement, an operation timing requirement, and the like.

In addition, the EVCC 100 and the SECC 200 may transmit and receive signals and data through P2PS signaling using an EV device P2PS controller 110 and a supply device P2PS controller 210. The P2PS may include LF signals. Each of the EV device P2PS controller 110 and the supply device P2PS controller 210 may have at least one or both of an LF transmitter including at least one antenna and an LF receiver including at least one antenna.

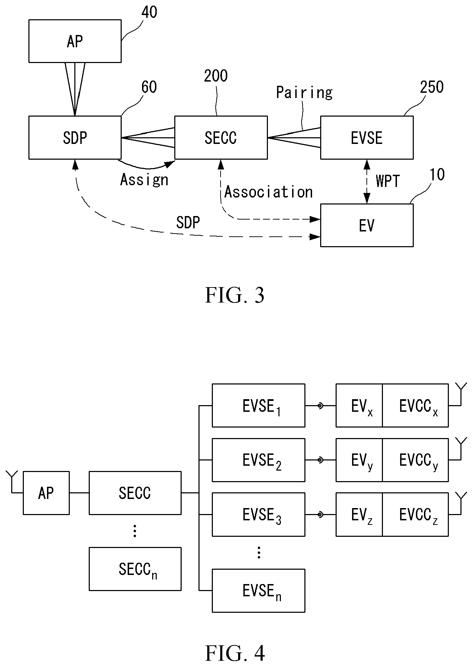

FIG. 3 is a flowchart for describing a system model capable of employing a WPT pairing method according to an exemplary embodiment of the present disclosure.

As shown in FIG. 3, the system model may include a singleton SECC discovery protocol (SDP) server 60 and may be configured to use a P2PS without a pairing and positioning device (PPD). The P2PS may include schemes using LF signals, LPE, optic signals, and the like.

Specifically, in the system model, the EV 10 equipped with the EVCC may be connected to or associated with the SECC 200 to perform WPT with one EVSE 250 among a plurality of EVSEs paired with the SECC 200. To this end, the SDP server 60 that manages a plurality of SECCs may perform SDP-based communications with the EVCC of the EV 10 through at least one access point (AP). The SDP server 60 may be installed outside the SECC 200 or mounted inside a specific SECC.

In addition, in the system model, a message sequence may follow the SDP, V2G session, fine positioning setup, positioning (or fine positioning), and pairing procedures in the order described. The positioning may mean aligning the primary device and the secondary device.

In the system model described above, 'association' may mean connecting to a target SECC or correct SECC as an `SECC pairing', and 'pairing' may mean recognizing a target EVSE or correct EVSE as an `EVSE pairing'. That is, the pairing may include checking whether an EVSE located under or corresponding to the EV is controllable. A correct association is required for successful pairing.

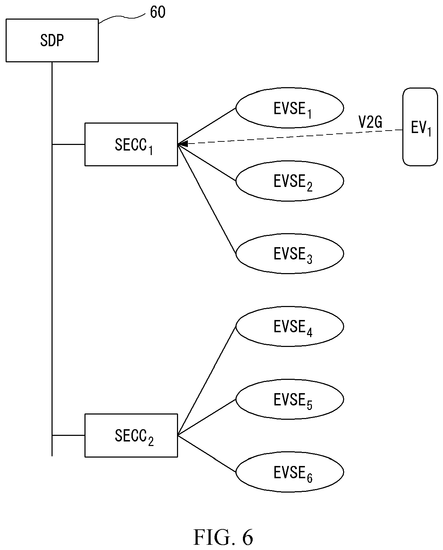

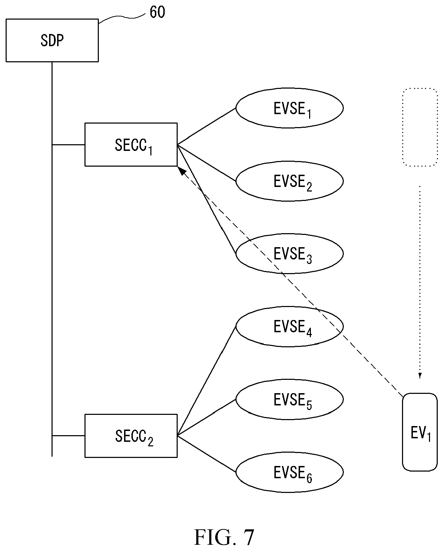

FIG. 4 is an exemplary diagram of a WPT system architecture capable of employing the WPT pairing method of FIG. 3, and FIGS. 5 to 7 are exemplary diagrams for describing a problem in association between the SECC and the EV in the system model of FIG. 3.

As shown in FIG. 4, in the WPT system architecture, at least one AP may be connected to at least one SECC, a specific SECC may be connected to a plurality of EVSEs (e.g., EVSE₁ to EVSEₙ), and some of the plurality of EVSEs may be respectively connected to a plurality of EVs (e.g., EVₓ, EV_{y}, EV_{z}) through electromagnetic coupling for WPT. The plurality of EVs may be equipped with a plurality of corresponding EVCCs (e.g., EVCCₓ, EVCC_{y}, EVCC_{z}), respectively. A specific SECC may communicate with a plurality of EVCCs through a wireless LAN, respectively.

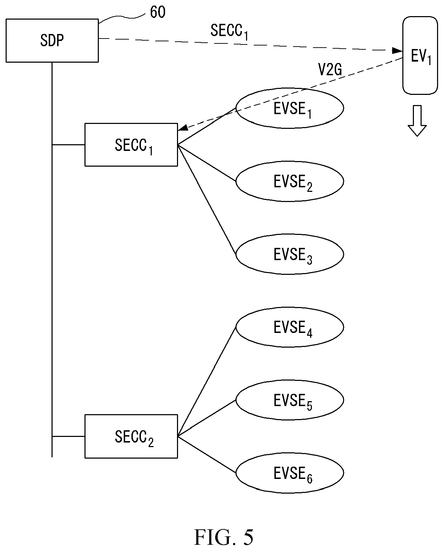

As shown in FIGS. 5 to 7, when the first EV (hereinafter, 'EV₁' for short) approaches or enters a charging station, the SDP server 60 may provide information on the first SECC (i.e., SECC₁) to the EV through a WLAN in order to configure a WPT V2G communication session.

That is, an SDP request message (e.g., SDPReq) transmitted from the SDP server 60 to the EV may include compatibility information and an EVID. Typically, the compatibility information may include information on several compatible SECCs. In addition, an SDP response message (e.g., SDPRes) transmitted from the EV to the SDP server 60 may include information on one candidate SECC selected by the EV, for example, the first SECC.

However, although the EV needs to establish a V2G communication session with the first SECC, an erroneous association to which the position of the EV is not properly reflected may occur frequently. Moreover, even when the EV is associated with a wrong SECC, there is no chance for the EV to detect it, except in case of a positioning failure.

Therefore, in exemplary embodiments, when positioning or fine positioning is performed, association may be performed at the same time.

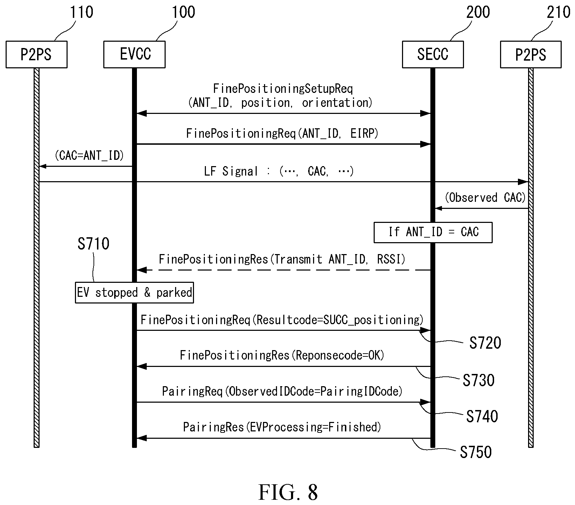

FIG. 8 is a sequence chart illustrating a WPT pairing method applicable to the system model of FIG. 3.

As shown in FIG. 8, a WPT pairing method may be a method of performing LF-based positioning with a lead of the EV. First, the EVCC 100 may provide information on an identifier (ANT_ID) of an antenna and an effective isotropically radiated power (EIRP) to the SECC 200. Then, the EVCC 100 may transmit an LF signal having a connection admission control (CAC) set to the identifier (ANT_ID) of the antenna to the P2PS controller 210 connected to the SECC 200 through the P2PS 110 controller connected to the EVCC 100.

Then, when the ANT_ID matches the CAC, the EVCC 100 may receive information on a received signal strength indicator (RSSI) for the LF signal from the SECC 200.

Then, the EVCC 100 may perform positioning based on the RSSI. A vehicle controller of the EV may park the EV according to a positioning result of the EVCC 100 (S710).

Then, the EVCC 100 may transmit a fine positioning request message (e.g., FinePositioningReq) having a result code (ResultCode) parameter set to 'success (SUCC_positioning)' to the SECC 200 (S720).

Then, the EVCC 100 may receive a fine positioning response message (e.g., FinePositioningRes) having a response code (ResponseCode) parameter set to `OK' from the SECC 200 (S730).

Then, the EVCC 100 may transmit, to the SECC 200, a pairing request message (PairingReq) having an identifier code (ObservedIDcode) parameter set to a pairing identification code and an EV processing (EVProcessing) parameter set to 'finished' (S740).

Then, the EVCC 100 may receive, from the SECC 200, a pairing response message (PairingRes) having an EV processing (EVProcessing) parameter set to 'finished' and a response code parameter set to `OK' (S750).

Meanwhile, the positioning may fail in the following cases. For example, when the EV arrives in a designated spot but the SECC cannot receive the LF signal, the SECC may report that there is no signal matching the identifier (AND_ID) of the antenna.

As another example, the EV arrives in a designated spot, but the SECC may report a weak signal. In this case, the weak signal may mean a signal having a strength equal to or less than a specific threshold, for example, an LF signal having a strength below a few nanotesla.

In the above-described case of positioning failure, the EVCC 100 may transmit a fine positioning request message (FinePositioningReq) having a result code parameter set to 'finished' to the SECC 200, and receive a fine positioning response message (FinePositioningRes) having a response code parameter set to `failure (FAILED_POSITIONING)' from the SECC 200.

In addition, in an exemplary embodiment, the EVCC 100 may receive, from the SECC 200, a fine positioning response message including information requesting to return to the fine positioning setup procedure. In addition, the EVCC 100 may further receive, from the SECC 200, a fine positioning response message having a response code parameter set to `OK' and including an alternative SECC information (AlternativeSECCInfo) parameter or an alternative SECC list (AlternativeSECCList) parameter.

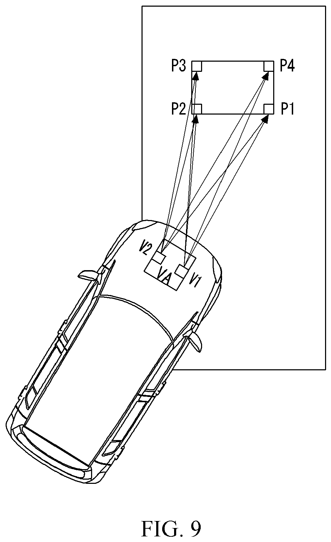

FIG. 9 is an exemplary diagram for describing an LF fine positioning procedure employable in the WPT pairing method of FIG. 8.

As shown in FIG. 9, in the fine positioning using LF signals, as a transmission coil of a transmission pad and a reception coil of a reception pad are located farther away, power loss may increase and power transmission efficiency may decrease, and thus it is necessary to align both the transmission and reception coils. Therefore, the vehicle may be positioned such that the two coils are close together, and the two coils may be aligned such that the two coils coincide at an electromagnetic center.

First, it may be assumed that two or more LF receivers are disposed at corners or between the corners of the transmission pad in the SD, and two or more LF transmitters are disposed in the EVD. In this state, when the vehicle approaches a specific parking area for charging, a frequency for a parking area selected by the SECC may be notified to the vehicle through a wireless LAN link.

The EV device may transmit a trigger signal to the SD at the selected frequency. The SECC may report received signal strength intensity (RSSI) values sensed for the LF signals to the EVCC. Further, the EV device may execute a position estimation algorithm based on the RSSI values fed back by the SD.

The EV device may request vehicle positioning using the LF signals, and the SECC receiving the vehicle positioning request may inform the EV device of the frequency to be used.

When a driver moves the vehicle to a specific parking space, that is, a charging space, and the reception pad approaches, for example, within 4 to 6 meters from the transmission pad, the LF receivers of the SD may detect the LF signals transmitted by the LF transmitters of the EV device.

The SECC connected to the SD may report measured values to the EVCC of the EV device through a WLAN, and the EVCC may dynamically calculate the position of the transmission pad based on the measured values. Based on the calculated position, positioning and alignment of the EV may be performed.

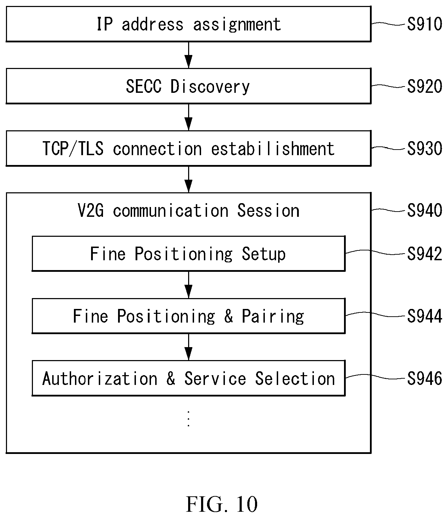

FIG. 10 is a flowchart illustrating a V2G communication procedure employable in the WPT pairing method of FIG. 8.

Communication between the EVCC and the SECC may be configured as follows. That is, when the EV arrives at a charging station and detects a WLAN according to a preconfigured rule, the EVCC conforming to a compatibility class A may configure a physical layer and a data link layer (i.e., OSI layers 1 and 2) according to a preconfigured rule to connect to the SECC that supports the compatibility class A.

When connected to the WLAN, the above-described processes related to the OSI layers may be activated, and may be associated with OSI layers 3 to. The above-described operations for `communication configuration' may involve the supply device's transition to a specific state and the EV device's transition to a specific state, and need to be executed successfully before other operations are started. Meanwhile, if there are two or more WLANs and they are detected by the EVCC, the EVCC may determine an appropriate WLAN link according to an individual rule of the EVCC.

As shown in FIG. 10, an Internet protocol (IP) address may be first assigned to the EV according to the WLAN connection (S910). After it is indicated that a data link is successfully established, the SECC may initiate an address assignment mechanism. The SECC may configure a static or dynamic IP address with an appropriate mechanism.

Then, the SECC may activate a preconfigured SECC discovery service according to the approach of the EV to discover a specific SECC among a plurality of SECCs (S920). The SECC discovery service may not be directly implemented by the SECC, but may be implemented by a separate device providing the service.

In the step S920, the SECC may stop the SDP server when a first communication configuration timer is greater than or equal to a first communication configuration time. The SECC may stop the IP address assignment mechanism when a second communication configuration timer is greater than or equal to a second communication configuration performance time. After the SDP server is successfully started, the SECC may wait for transport layer security (TLS) connection initialization according to an SDP response message, and wait until a TLS connection is established. The SECC may stop waiting for the TLS connection establishment when the second communication configuration timer becomes greater than or equal to the second communication configuration performance time. In addition, after the TLS connection is established, the SECC may wait for initialization of a V2G communication session.

When the above-described operations are completed, the SECC may perform TCP/TLC connection establishment (S930). After the TLS connection is successfully established, the SECC may stop the SDP server.

Then, the SECC may perform a V2G communication session with the EVCC (S940). In exemplary embodiments, the V2G communication session may correspond to a WPT session.

The V2G communication session may include a fine positioning setup step S942 associated with WPT, a fine positioning and pairing step S944, an authorization and service selection step 946, a final compatibility check step, an alignment check step, and the like.

After the session setup (SessionSetup) is completed, in the fine positioning setup step S942, the EVCC may transmit a fine positioning setup request message
(WPT_FinePositioningSetupReq) to determine options of the SECC for supporting the fine positioning, pairing, and alignment check. Here, the SECC may respond to the request message with a fine positioning setup response message (WPT_FinePositioningSetupRes) including information on available options related to the fine positioning, pairing, and alignment check. After analyzing the available options, the EVCC may transmit, to the SECC, a fine positioning setup request message including information on options selected for the fine positioning, pairing, and alignment check to be performed in the EV. Then, the SECC may respond with acknowledgement or `OK' to the selection of the EV using a fine positioning setup response message.

The available options may include an EV device fine positioning method list (EVDeviceFinePositioningMethodList), EV device pairing method list, and EV device alignment check method list (EVDeviceAlignmentCheckMethodList). The EV device fine positioning method list may include 'manual', `using of LF signals transmitted by EV (LF_TxEV)', `using of LF signals transmitted by a primary device (LF_TxPrimaryDevice)', `application of LPE', 'proprietary', and/or the like. The EV device pairing method list may include `external confirmation', `application of LPE', `using of LF signals transmitted by EV (LF_TxEV)', `using of LF signals transmitted by a primary device (LF_TxPrimaryDevice)', `optical', 'proprietary', and/or the like.

In the fine positioning and pairing step S944, the EVCC may inform the SECC of selection of an available option through a fine positioning request message (WPT_FinePositioningReq). In an exemplary embodiment, the EV device may select one of 'LF_TxEV' or `LF_TxPrimaryDevice' as a fine positioning method and a pairing method.

Describing the fine positioning and pairing step S944 in more detail, the EVCC of the EV operating as a transmitter that transmits LF signals may be configured to transmit, to the SECC, a fine positioning request message (FinePositioningReq) including information on an identifier of a first antenna and a first operating frequency of a first EVSE among a plurality of EVSEs connected to the SECC; transmit an LF signal to a primary device of the first EVSE at the first operating frequency; receive, , from the SECC, information on the LF signal at the EVSEs through a fine positioning response message (FinePositioningRes); dynamically calculate a position of a primary device of a second EVSE having the largest LF signal value based on the information on the LF signal at the EVSEs; and park the EV when detecting an LF signal indicating that a secondary device of the EV is located within an alignment tolerance range from the primary device of the second EVSE. When the second EVSE is the same EVSE as the first EVSE indicated by the fine positioning request message or fine positioning setup response message, the EVCC may transmit, to the SECC, a pairing request message (PairingReq) having an identifier code (ObservedIDcode) parameter set to a pairing identification code (PairingIDCode) and an EV processing (EVProcessing) parameter set to 'finished' immediately after transmitting a fine positioning request message (FinePositioningReq) having a result code (ResultCode) parameter set to 'success' to the SECC and receiving a fine positioning response (FinePositioningRes) having a response code parameter set to 'OK'.

In addition, the EVCC, as an apparatus implementing the WPT pairing method, may receive, from the SECC, a pairing response message (PairingRes) having an EV processing parameter set to 'finished' and a response code parameter set to 'OK'.

Here, when the second EVSE having the largest LF signal value is different from the first EVSE indicated by the fine positioning request message or fine positioning setup request message (FinePositioningSetupReq), but the second EVSE has the same configuration as the first EVSE, the SECC may change an identifier of a second antenna of the second EVSE to the identifier of the first antenna of the first EVSE, and control an internal connection between the second antenna of the second EVSE and the first antenna of the first EVSE to be changed.

In addition, when the second EVSE having the largest LF signal value is an EVSE different from the first EVSE indicated by the fine positioning request message or fine positioning setup response message (FinePositioningSetupRes), and the second EVSE is an EVSE having a configuration different from that of the first EVSE, the EVCC may receive, from the SECC, a fine positioning response message including information requesting to return to the fine positioning setup procedure, or may receive, from the SECC, a fine positioning response message having a response code (ResponseCode) parameter set to `OK' and including an alternative SECC information (AlternativeSECCInfo) parameter or an alternative SECC list (AlternativeSECCList) parameter.

In addition, the EVCC may be configured to transmit, to the SECC, an LF signal having a CAC set to the same antenna identifier (ANT_ID) or antenna identifier code (IDCode) through P2PS signaling between the EVCC and the SECC.

In addition, the second EVSE may receive the LF signal with a strength exceeding a specific threshold through all antennas for LF signal reception, and may be an EVSE having the largest LF signal value among the EVSEs.

In another implementation form, the SECC, as an SECC performing fine positioning and pairing with the EVCC of the EV operating as a transmitter transmitting LF signals, may be configured to: in response to a fine positioning setup request message of the EVSE, transmit, to the EVCC, a fine positioning setup response message (FinePositioningSetupRes) including information on identifiers of antennas of a plurality of EVSEs connected to the SECC, positions and directions of the antennas, and operating frequencies; receive, from the EVCC, information on an identifier of a first antenna and information on an EIRP of an antenna of a secondary device of the EV through a fine positioning request message (FinePositioningReq); activate LF receivers of the respective EVSEs to receive an LF signal for fine positioning from the EV and receive an LF signal having the identifier of the first antenna through P2PS signaling; determine whether the identifier of the first antenna is identical to a pre-stored antenna identifier or identifier code (ObservedIDCode); when the identifier of the first antenna is identical to the identifier code, transmit, to the EVCC, information on RSSIs of the LF signal at the EVSEs, receive, from the EVCC, a fine positioning request (FinePositioningReq) message having a result code (ResultCode) parameter set to 'success', and transmit, to the EVCC, a fine positioning response (FinePositioningRes) message having a response code (ResponseCode) parameter is set to `OK' in response to the fine positioning request message; and when the second EVSE having a largest LF signal value among the EVSEs is identical to the first EVSE corresponding to the identifier of the first antenna indicated by the fine positioning setup response message or the fine positioning request message, receive, from the EVCC, a pairing request (PairingReq) message having an identifier code parameter set to a paring identification code and an EV processing (EVProcessing) parameter set to 'finished'.

In addition, when the second EVSE is identical to the first EVSE, the SECC may transmit, to the EVCC, a pairing response (PairingRes) message having an EV processing parameter set to 'finished' and a response code parameter set to 'OK'.

In addition, when the second EVSE is an EVSE different from the first EVSE and the second EVSE is an EVSE having the same configuration as the first EVSE, the SECC may change an identifier of a second antenna of the second EVSE to the identifier of the first antenna of the first EVSE; and control an internal connection between the second antenna of the second EVSE and the first antenna of the first EVSE to be changed.

In addition, when the second EVSE is an EVSE different from the first EVSE and the EVSE is an EVSE having a different configuration from that of the first EVSE, the SECC may transmit, to the EVCC, a positioning setup response message including information requesting to return to the fine positioning setup procedure; or may transmit, to the EVCC, a fine positioning response message having a response code (ResponseCode) parameter set to `OK' and including an alternative SECC information (AlternativeSECCInfo) parameter or an alternative SECC list (AlternativeSECCList) parameter.

In another implementation form, the SECC, as an SECC performing fine positioning and pairing with the EVCC of the EV while operating as a transmitter transmitting LF signals, may be configured to: in response to a fine positioning setup request message, transmit, to the EVCC, a fine positioning setup response message (FinePositioningSetupRes) including information on identifiers of antennas and operating frequencies of a plurality of EVSEs connected to the SECC; control a first EVSE arbitrarily selected from the EVSEs to transmit an LF signal for positioning; and receive, from the EVCC, a pairing request (PairingReq) message having an identifier code (ObservedIDcode) parameter set to a pairing identification code and an EV processing parameter set to 'finished' immediately after receiving a fine positioning request message (FinePositioningReq) having a result code parameter set to 'success' and transmitting a fine positioning response message (FinePositioningRes) message having a response code parameter set to OK in response to the fine positioning request message.

In addition, the SECC may transmit, to the EVCC, a pairing response message (PairingRes) having an EV processing parameter set to 'finished' and a response code parameter set to OK in response to the pairing request message.

In addition, when a reception result of the LF signal, which is received from the EV, is less than a reference value, the SECC may be configured to: control a second EVSE having the same antenna configuration as the first EVSE among the EVSEs indicated by the fine positioning setup response message to transmit an LF signal with the same antenna identifier; and when an EVSE having a largest LF signal value for the LF signal among the EVSEs is the second EVSE, change an identifier of a second antenna of the second EVSE to an identifier of a first antenna of the first EVSE, and control an internal connection between the second antenna of the second EVSE and the first antenna of the first EVSE to be changed.

In addition, when an EVSE having the largest LF signal value for the LF signal is not the second EVSE, has a different configuration from that of the second EVSE, or the LF signal value is less than a specific threshold, the SECC may be configured to transmit, to the EVCC, a positioning setup response message including information requesting to return to the fine positioning setup procedure; or transmit, to the EVCC, a fine positioning response message having a response code (ResponseCode) parameter set to `OK' and including an alternative SECC information (AlternativeSECCInfo) parameter or an alternative SECC list (AlternativeSECCList) parameter.

In addition, the SECC may determine whether a CAC in the LF signal transmitted through P2PS signaling with the EVCC is maintained as the same antenna identifier (ANT_ID) or antenna identifier code (IDCode).

In another implementation form, the EVCC, as an EVCC performing fine positioning and pairing with the SECC operating as a transmitter transmitting LF signals, may be configured to transmit, to the SECC, a fine positioning request message (FinePositioningReq) including information on an identifier (ANT_ID) of a first antenna and an EIRP of a secondary device of the EV; receive an LF signal from a primary device of a first EVSE arbitrarily selected from EVSEs connected to the SECC; transmit, to the SECC, an LF signal having a CAC set to the identifier of the first antenna identifier or identifier code (IDCode) of the first antenna through P2PS signaling; transmit, to the SECC, information on an RSSI detected at a secondary device of the EV; dynamically calculate a position of the primary device based on the RSSI; and in response to acquiring a signal or RSSI indicating that the secondary device is located within an alignment tolerance range from the primary device, stop and park the EV.

In addition, the EVCC may perform transmit, to the SECC, a pairing request message (PairingReq) having an identifier code (ObservedIDcode) parameter set to a pairing identification code and an EV processing (EVProcessing) parameter set to 'finished', immediately after transmitting a fine positioning request message having a result code (ResultCode) parameter set to `positioning success' to the SECC and receiving a fine positioning response message having a response code (ResponseCode) parameter set to `OK' from the SECC. In addition, the EVCC may receive, from the SECC, a pairing response (PairingRes) message having an EV processing parameter set to 'finished' and a response code parameter set to 'OK'.

In addition, when a signal or RSSI value indicating that the secondary device is located within an alignment tolerance range from the primary device is not recognized, the EVCC may be configured to transmit, to the SECC, a fine positioning request message having a result code parameter set to `positioning failure'; and receive, from the SECC, a fine positioning response message having a response code parameter set to `OK' and including an alternative SECC information (AlternativeSECCInfo) parameter or an alternative SECC list (AlternativeSECCList) parameter.

The existing procedures or configurations may be used as they are in the above-described authorization and service selection step 946, final compatibility check step, alignment check step, and the like, so detailed descriptions thereof will be omitted.

Meanwhile, after terminating the V2G communication session, the SECC may terminate the TLS connection. Here, if value-added services are used, the SECC may determine an appropriate time to close the communication channel.

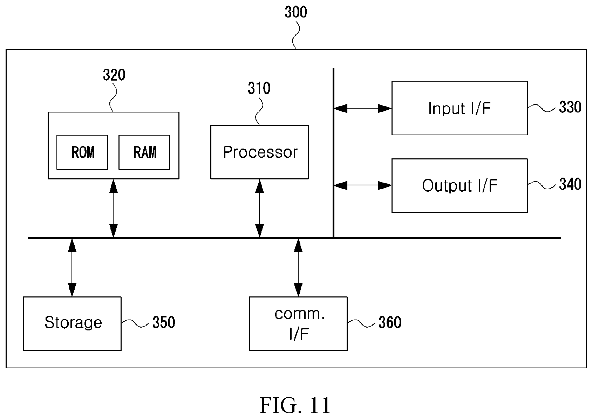

FIG. 11 is a schematic block diagram for describing main components of a WPT pairing apparatus according to another exemplary embodiment of the present disclosure.

As shown in FIG. 11, a WPT pairing apparatus 300 may be a means mounted as a part of the EVCC or SECC, a means combined within the EVCC or SECC, or a function unit performing functions corresponding to those of the means, and may include at least one processor 310 and a memory 320. In addition, the WPT pairing apparatus 300 may further include an input interface 330, an output interface 340, and a storage device 350. In addition, the WPT pairing apparatus 300 may include a communication interface 360. The communication interface 360 may correspond to a transmitting/receiving device for network access.

The processor 310 may execute program instructions stored in the memory 320 and/or storage device 350. The processor 310 may be implemented as at least one central processing unit (CPU) or graphics processing unit (GPU), or implemented as other processors capable of performing the method according to the present disclosure.

The memory 320 may include, for example, a volatile memory such as read only memory (ROM) and a non-volatile memory such as random access memory (RAM). The memory 320 may load the program instructions stored in the storage device 350 and provide the loaded program instructions to the processor 310.

The storage device 350 is a recording medium suitable for storing the program instructions and data, such as a magnetic medium such as a hard disk, floppy disk, and magnetic tape, an optical medium such as a compact disk read only memory (CD-ROM), digital versatile disk (DVD), a magneto-optical medium such as a floptical disk, or a semiconductor memory such as a flash memory, erasable programmable ROM (EPROM), or solid state drive (SSD) made based thereon.

The storage device 350 may store program instructions. The program instructions may include program instructions for WPT pairing according to the present disclosure. The program instructions for WPT may be implemented so that the processor 310 performs the fine positioning and pairing procedure described above with reference to FIG. 10 in a state of being loaded in the processor 310 when executed by the processor 310.

Meanwhile, functions or configurations of the input interface 330, the output interface 340, and the communication interface 360 are obvious to those skilled in the art to which the present disclosure belongs, so detailed descriptions thereof are omitted.

Meanwhile, the proactive pairing methods described in the above-described exemplary embodiments may be implemented as computer-readable programs or codes on a computer-readable recording medium. The computer-readable recording medium may include all types of storage devices in which data that can be read by a computer system is stored. In addition, the computer-readable recording medium may be distributed to computer systems connected through a network to store and execute the computer-readable programs or codes in a distributed manner.

The computer-readable recording medium may include hardware devices specially configured to store and execute program instructions, such as ROM, RAM, and flash memory. The program instructions may include high-level language codes that can be executed by a computer using an interpreter or the like as well as machine codes generated by a compiler.

Some aspects of the present disclosure have been described above in the context of a device but may be described using a method corresponding thereto. Here, blocks or the device corresponds to operations of the method or characteristics of the operations of the method. Similarly, aspects of the present disclosure described above in the context of a method may be described using blocks or items corresponding thereto or characteristics of a device corresponding thereto. Some or all of the operations of the method may be performed, for example, by (or using) a hardware device such as a microprocessor, a programmable computer or an electronic circuit. In some embodiments, at least one of most important operations of the method may be performed by such a device.

In exemplary embodiments, a programmable logic device (e.g., a field-programmable gate array) may be used to perform some or all of functions of the methods described herein. In embodiments, the field-programmable gate array may be operated with a microprocessor to perform one of the methods described herein. In general, the methods are preferably performed by a certain hardware device.

While the present disclosure has been described above with respect to embodiments thereof, it would be understood by those of ordinary skill in the art that various changes and modifications may be made without departing from the technical conception and scope of the present disclosure defined in the following claims.

## Claims

1. A method for pairing with a supply equipment communication controller (SECC), performed by an electric vehicle (EV), the method comprising:
transmitting, to the SECC, a fine positioning request message (FinePositioningReq) including information on an identifier of a first antenna and a first operating frequency of a first electric vehicle supply equipment (EVSE) among EVSEs connected to the SECC;
transmitting, to a primary device of the first EVSE, a low-frequency (LF) signal at the first operating frequency;
receiving, from the SECC, information on the LF signal at the EVSEs through a fine positioning response message (FinePositioningRes);
dynamically calculating a position of a primary device of a second EVSE having a largest LF signal value based on the information on the LF signal at the EVSEs;
parking when detecting an LF signal indicating that a secondary device of the EV is located within an alignment tolerance range from the primary device of the second EVSE;
determining whether the second EVSE is identical to the first EVSE indicated by the fine positioning request message or a fine positioning setup response message; and
immediately after transmitting a fine positioning request message having a result code (ResultCode) parameter set to 'success' to the SECC and receiving a fine positioning response message having a response code (ResponseCode) parameter set to `OK' from the SECC, transmitting, to the SECC, a pairing request message having an identifier code (ObservedIDcode) parameter set to a pairing identification code and an EV processing (EVProcessing) parameter set to 'finished'.

2. The method of claim 1, further comprising: receiving, from the SECC, a pairing response message (PairingRes) having an EV processing parameter set to 'finished' and a response code parameter set to 'OK'.

3. The method of claim 1, further comprising: when the second EVSE having the largest LF signal value is different from the first EVSE indicated by the fine positioning request message or fine positioning setup request message (FinePositioningSetupRes), and the second EVSE has a same configuration as the first EVSE,
allowing the SECC to change an identifier of a second antenna of the second EVSE to the identifier of the first antenna of the first EVSE and to control an internal connection between the second antenna of the second EVSE and the first antenna of the first EVSE to be changed.

4. The method of claim 1, further comprising: when the second EVSE having the largest LF signal value is different from the first EVSE indicated by the fine positioning request message or fine positioning setup response message (FinePositioningSetupRes), and the second EVSE is an EVSE having a configuration different from that of the first EVSE,
receiving, from the SECC, a fine positioning response message including information requesting to return to a fine positioning setup procedure; or
receiving, from the SECC, a fine positioning response message having a response code parameter set to `OK' and including an alternative SECC information (AlternativeSECCInfo) parameter or an alternative SECC list (AlternativeSECCList) parameter.

5. The method of claim 1, further comprising: transmitting, to the SECC, an LF signal having a `connection admission control (CAC)' set to a same antenna identifier (ANT_ID) or antenna identifier code (IDCode) through point-to-point signal (P2PS) signaling between an electric vehicle communication controller (EVCC) of the EV and the SECC.

6. The method of claim 1, wherein the largest LF signal value is equal to or greater than a specific threshold, the second EVSE receives the LF signal with a strength exceeding the specific threshold through all antennas for LF signal reception and has the largest LF signal value among the EVSEs.

7. A method for pairing with an electric vehicle communication controller (EVCC) of an electric vehicle (EV), performed by a supply equipment communication controller (SECC), the method comprising:
in response to a fine positioning setup request message (FinePositioningSetupReq), transmitting, to the EVCC, a fine positioning setup response message (FinePositioningSetupRes) including information on identifiers of antennas, positions and directions of antennas, and operating frequencies of respective electric vehicle supply equipments (EVSEs) connected to the SECC;
receiving, from the EVCC, information on an identifier of a first antenna and information on an effective isotropically radiated power (EIRP) of an antenna of a secondary device of the EV through a fine positioning request message (FinePositioningReq);
activating LF receivers of the respective EVSEs to receive a low-frequency (LF) signal for fine positioning from the EV;
receiving an LF signal having the identifier of the first antenna through point-to-point signal (P2PS) signaling;
determining whether the identifier of the first antenna is identical to a pre-stored antenna identifier or identifier code (ObservedIDCode);
transmitting, to the EVCC, information on received signal strength indicators (RSSIs) of the LF signal at the EVSEs, when the identifier of the first antenna is identical to the identifier code;
receiving, from the EVCC, a fine positioning request message (FinePositioningReq) having a result code (ResultCode) parameter set to 'success';
transmitting, to the EVCC, a fine positioning response message (FinePositioningRes) having a response code (ResponseCode) parameter set to `OK' in response to the fine positioning request message; and
receiving, from the EVCC, a pairing request message (PairingReq) having an identifier code parameter set to a paring identification code and an EV processing (EVProcessing) parameter set to 'finished', when the second EVSE having a largest LF signal value among the EVSEs is identical to the first EVSE corresponding to the identifier of the first antenna indicated by the fine positioning setup response message or the fine positioning request message.

8. The method of claim 7, further comprising: when the second EVSE is identical to the first EVSE, transmitting, to the EVCC, a pairing response message (PairingRes) having an EV processing parameter set to 'finished' and a response code parameter set to 'OK'.

9. The method of claim 7, further comprising: when the second EVSE is an EVSE different from the first EVSE and the second EVSE is an EVSE having a same configuration as the first EVSE,
changing an identifier of a second antenna of the second EVSE to the identifier of the first antenna of the first EVSE; and
controlling an internal connection between the second antenna of the second EVSE and the first antenna of the first EVSE to be changed.

10. The method of claim 7, further comprising: when the second EVSE is an EVSE different from the first EVSE and the second EVSE is an EVSE having a configuration different from that of the first EVSE,
transmitting, to the EVCC, a fine positioning response message including information requesting to return to a fine positioning setup procedure; or
transmitting, to the EVCC, a fine positioning response message having a response code (ResponseCode) parameter set to `OK' and including an alternative SECC information (AlternativeSECCInfo) parameter or an alternative SECC list (AlternativeSECCList) parameter.

11. A method for pairing with an electric vehicle communication controller (EVCC) of an electric vehicle (EV), performed by a supply equipment communication controller (SECC), the method comprising:
in response to a fine positioning setup request message (FinePositioningSetupReq), transmitting, to the EVCC, a fine positioning setup response message (FinePositioningSetupRes) including information on identifiers of antennas and operating frequencies of respective electric vehicle supply equipments (EVSEs) connected to the SECC;
controlling a first EVSE arbitrarily selected from the EVSEs to transmit a low-frequency (LF) signal for positioning;
receiving, from the EVCC, a fine positioning request message (FinePositioningReq) having a result code (ResultCode) parameter set to 'success'; and
immediately after transmitting a fine positioning response message (FinePositioningRes) having a result code (ResultCode) parameter set to `OK' to the EVCC in response to the fine positioning request message, receiving, from the EVCC, a pairing request message having an identifier code (ObservedIDcode) parameter set to a pairing identification code and an EV processing (EVProcessing) parameter set to 'finished'.

12. The method of claim 11, further comprising: transmitting, to the EVCC, a pairing response message (PairingRes) having an EV processing parameter set to 'finished' and a response code parameter set to `OK' in response to the pairing request message.

13. The method of claim 11, further comprising: when a reception result of the LF signal received at a secondary device of the EV, which is received from the EV, is less than a reference value,
controlling a second EVSE having a same antenna configuration as the first EVSE among the EVSEs indicated by the fine positioning setup response message to transmit an LF signal with a same antenna identifier; and
when an EVSE having a largest LF signal value for the LF signal among the EVSEs is the second EVSE, changing an identifier of a second antenna of the second EVSE to an identifier of a first antenna of the first EVSE, and controlling an internal connection between the second antenna of the second EVSE and the first antenna of the first EVSE to be changed.

14. The method of claim 13, further comprising: when an EVSE having a largest LF signal value for the LF signal is not the second EVSE and has a different configuration from that of the second EVSE, or the LF signal value is less than a specific threshold,
transmitting, to the EVCC, a positioning setup response message including information requesting to return to a fine positioning setup procedure; or
transmitting, to the EVCC, a fine positioning response message having a response code (ResponseCode) parameter set to `OK' and including an alternative SECC information (AlternativeSECCInfo) parameter or an alternative SECC list (AlternativeSECCList) parameter.

15. The method of claim 11, further comprising: determining whether a `connection admission control (CAC)' in the LF signal transmitted through point-to-point signal (P2PS) signaling with the EVCC is maintained as a same antenna identifier (ANT_ID) or antenna identifier code (IDCode).

16. A method for pairing with a supply equipment communication controller (SECC), performed by an electric vehicle communication controller (EVCC), the method comprising:
transmitting, to the SECC, a fine positioning request message (FinePositioningReq) including information on an identifier (ANT_ID) of a first antenna and an effective isotropically radiated power (EIRP) of a secondary device of an electric vehicle (EV);
receiving a low-frequency (LF) signal from a primary device of a first electric vehicle supply equipment (EVSE) arbitrarily selected from EVSEs connected to the SECC;
transmitting, to the SECC, an LF signal having a `connection admission control (CAC)' set to the identifier of the first antenna identifier or an identifier code (IDCode) of the first antenna through point-to-point signal (P2PS) signaling;
transmitting, to the SECC, information on a received signal strength indicator (RSSI) detected at a secondary device of the EV;
dynamically calculating a position of the primary device based on the RSSI;
in response to acquiring a signal or RSSI indicating that the secondary device is located within an alignment tolerance range from the primary device, stopping and parking the EV; and
immediately after transmitting a fine positioning request message having a result code (ResultCode) parameter set to `positioning success' to the SECC and receiving a fine positioning response message having a response code (ResponseCode) parameter set to `OK' from the SECC, transmitting, to the SECC, a pairing request message (PairingReq) having an identifier code (ObservedIDcode) parameter set to a pairing identification code and an EV processing (EVProcessing) parameter set to 'finished'.

17. The method of claim 16, further comprising: receiving, from the SECC, a pairing response message (PairingRes) having an EV processing parameter set to 'finished' and a response code parameter set to 'OK'.

18. The method of claim 16, further comprising: when a signal or RSSI value indicating that the secondary device is located within an alignment tolerance range from the primary device is not recognized in the parking of the EV,
transmitting, to the SECC, a fine positioning request message having a result code parameter set to `positioning failure'; and
receiving, from the SECC, a fine positioning response message having a response code parameter set to `OK' and including an alternative SECC information (AlternativeSECCInfo) parameter or an alternative SECC list (AlternativeSECCList) parameter.

19. A wireless power transfer pairing apparatus included in a supply equipment communication controller (SECC), which is configured to perform paring with an electric vehicle communication controller (EVCC) in wireless power transfer between an electric vehicle (EV) and a power grid, the wireless power transfer apparatus comprising:
a processor; and
a memory storing instructions executable by the processor,
wherein when executed by the processor, the instructions cause the processor to perform:
transmitting and receiving, to and from the EVCC, fine positioning-related messages to align a secondary device of the EV within an alignment tolerance range from a primary device of an electric vehicle supply equipment (EVSE) connected to the SECC;
receiving, from the EVCC, a low-frequency (LF) signal having a `connection admission control (CAC)' set to an identifier (ANT_ID) of a first antenna or an antenna identifier code (IDCode) through point-to-point signal (P2PS) signaling; and
after receiving a pairing request message (PairingReq) having a result code (ResultCode) parameter set to 'success' from the EVCC and transmitting a fine positioning response message (FinePositioningRes) having a response code (ResponseCode) parameter set to `OK' to the EVCC, transmitting, from the EVCC, a paring request message (PairingReq) having an identifier code (ObservedIDcode) parameter set to a pairing identification code and an EV processing (EVProcessing) parameter set to 'finished'.

20. The wireless power transfer pairing apparatus of claim 19, wherein the instructions cause the processor to further perform: transmitting, to the EVCC, a pairing response message (PairingRes) having an EV processing parameter set to 'finished' and a response code parameter set to 'OK'.

21. The wireless power transfer pairing apparatus of claim 19, wherein the instructions cause the processor to further perform:
controlling a first EVSE arbitrarily selected from among EVSEs connected to the SECC to transmit a low frequency (LF) signal for fine positioning;
when a reception result for the LF signal received at the secondary device of the EV, which is received from the EV, is less than a reference value, controlling a second EVSE having a same antenna configuration as the first EVSE among EVSEs indicated by the fine positioning request message or a fine positioning setup response message to transmit an LF signal with a same antenna identifier;
receiving a fine position request message (FinePositioningReq) having a result code (ResultCode) parameter set to 'success' from the EVCC of the EV that has stopped and parked after performing fine positioning based on the LF signal; and
when an EVSE having a largest LF signal value for the LF signal is the second EVSE, changing an identifier of a second antenna of the second EVSE to an identifier of a first antenna of the first EVSE, and controlling an internal connection between the second antenna of the second EVSE and the first antenna of the first EVSE to be changed.

22. The wireless power transfer pairing apparatus of claim 19, wherein the instructions cause the processor to further perform:
receiving, from the EVCC, a fine positioning request message having a result code parameter set to `positioning failure'; and
in response to the fine positioning request message, transmitting, to the SECC, a fine positioning response message having a response code (ResponseCode) parameter set to OK and including an alternative SECC information (AlternativeSECCInfo) parameter or an alternative SECC list (AlternativeSECCList) parameter.
